(19) Europäisches Patentamt
European Patent Office
Office européen des brevets

(11) Veröffentlichungsnummer: **0 356 392 A2**

(12) # EUROPÄISCHE PATENTANMELDUNG

(21) Anmeldenummer: **89810606.7**

(22) Anmeldetag: **15.08.89**

(51) Int. Cl.5: **C 08 G 59/32**
C 08 G 59/50, C 08 L 63/00
//(C08L63/00,35:00)

(30) Priorität: **24.08.88 CH 3135/88**

(43) Veröffentlichungstag der Anmeldung:
**28.02.90 Patentblatt 90/09**

(84) Benannte Vertragsstaaten:
**CH DE ES FR GB IT LI NL SE**

(71) Anmelder: **CIBA-GEIGY AG**
**Klybeckstrasse 141**
**CH-4002 Basel (CH)**

(72) Erfinder: **Schmid, Rolf, Dr.**
**Buhnenstock 14**
**CH-3150 Schwarzenburg (CH)**

**Stauffer, Werner**
**Avenue Jean-Marie Musy 6**
**CH-1700 Fribourg (CH)**

(54) **Härtbares Epoxidharzgemisch.**

(57) Härtbare Gemische, enthaltend

(a) als Epoxidharzkomponente 50 bis 100 Gew.-% einer Tetraglycidylverbindung der Formel I

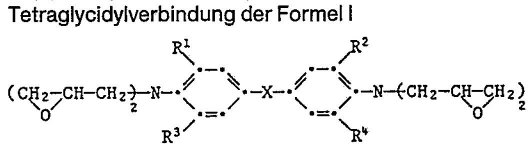 (I),

worin $R^1$, $R^2$, $R^3$ und $R^4$ unabhängig voneinander je ein Wasserstoffatom, ein Halogenatom oder ein $C_1$-$C_4$-Alkyl bedeuten und X für eine direkte Bindung, ein Methylen, Isopropyliden, O, CO, S oder $SO_2$ steht, und 0 bis 50 Gew.-%, bezogen auf die Tetraglycidylverbindung der Formel I, einer Diepoxidverbindung oder einer von der Verbindung der Formel I verschiedenen Polyepoxidverbindung,

(b) als Härtungsmittel das Diamin der Formel II

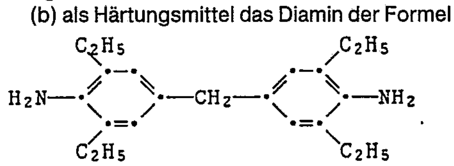 (II)

in einer Menge, dass pro Epoxidäquivalent 0,2 bis 1,1 Aminwasserstoffäquivalente vorliegen, gegebenenfalls ein Diamin der Formel III

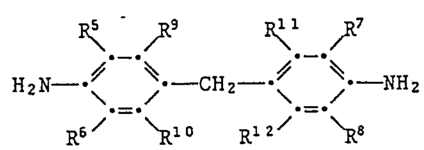 (III),

worin $R^5$, $R^6$, $R^7$ und $R^8$ unabhängig voneinander je ein $C_1$-$C_4$-Alkyl bedeuten, wobei nicht mehr als zwei der $R^5$ bis $R^8$-Substituenten für ein Ethyl stehen, und $R^9$, $R^{10}$, $R^{11}$ und $R^{12}$ unabhängig voneinander je ein Wasserstoff- oder Halogenatom bedeuten, gegebenenfalls ein disekundäres Diamin der Formel IV

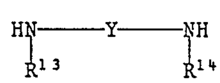 (IV),

EP 0 356 392 A2

worin Y einen unsubstituierten oder durch $C_1$-$C_4$-Alkyle substituierten Polymethylenrest mit mindestens 4 C-Atomen in der linearen Polymethylenkette und $R^{13}$ und $R^{14}$ je einen unsubstituierten oder durch $C_1$-$C_4$-Alkyle substituierten gesättigten carbocyclischen Ring oder Ringsystem mit mindestens 5 Ringkohlenstoffatomen bedeuten, wobei die Summe der Aminwasserstoffäquivalente der Diamine der Formeln II, III und IV nicht grösser als 1,2 ist,

(c) 10 bis 60 Gew.-%, bezogen auf die Epoxidharzkomponente (a) eines Thermoplasten mit einer Glasumwandlungstemperatur von mindestens 150° C und

(d) 0 bis 20 Gew.-%, bezogen auf die Epoxidharzkomponente (a) eines aminoder carboxylterminierten Kautschuks auf Basis von Butadien oder Butadien-Acrylnitril, eignen sich vorzugsweise zur Herstellung von Prepregs sowie von Filmen geringer Dicke.

**Beschreibung**

## Härtbares Epoxidharzgemisch

Die Erfindung betrifft ein härtbares Gemisch, enthaltend mindestens eine Tetraglycidylverbindung eines zweikernigen Diamins, vorzugsweise von Diaminodiphenylmethan, Bis-(3,5-diethyl-4-aminophenyl)-methan, vorzugsweise zusammen mit einem anderen alkyl- oder halogensubstituierten zweikernigen Diamin oder einem bestimmten disekundären Diamin, als Härtungsmittel und ausserdem einen Thermoplasten mit einer Glasumwandlungstemperatur von mindestens 150°C, und dessen Verwendung, insbesondere als Matrixharz für Prepregs.

Substituierte zweikernige Diamine, wie beispielsweise Bis-(4-amino-3,5-dialkylphenyl)-methane oder Bis-(4-amino-3-chlor-5-ethylphenyl)-methan, sind als Härtungsmittel für Epoxidharze bekannt, beispielsweise aus dem GB-Patent 935,606, der DE-OS 23 39 237 oder der EP-A-0 171 588. Die vorbekannten härtbaren Gemische weisen eine geringe Lagerbeständigkeit auf und eignen sich nur beschränkt zur Herstellung von Prepregs, da diese schnell die zur handlicheren Verarbeitung erwünschte Klebrigkeit verlieren.

Es ist ferner bekannt, dass man durch Zusatz von bestimmten Thermoplasten zu Epoxidharzgemischen deren Eigenschaften modifizieren kann. Beispielsweise ist es aus der EP-A-0 108 476 bekannt, dass Polyetherimide als Zusatz zu härtbaren Epoxidgemischen die Viskositätseigenschaften der Gemische vorteilhaft beeinflussen. In der DE-OS 26 50 019 wird offenbart, dass man durch Zusatz von Polyetheramidimidharzen zu härtbaren Epoxidharzen Formstoffe mit einer höheren Flexibilität erhält.

Es wurde nun gefunden, dass man bei Verwendung von Bis-(3,5-diethyl-4-aminophenyl)-methan als Härtungsmittel für Tetraglycidylverbindungen zweikerniger Diamine, welche im Gemisch mit einem Thermoplasten eingesetzt werden, Formstoffe mit einer überraschend hohen Dehnbarkeit und Bruchzähigkeit bei hoher Glasumwandlungstemperatur (Tg) erhält.

Die erfindungsgemässen Gemische haben neben einer besseren Verarbeitung bei Verwendung eines Härtergemisches zudem den Vorteil, dass der Härter im härtbaren Gemisch nicht auskristallisiert und dadurch die Klebrigkeit der mit den erfindungsgemässen Gemischen hergestellten Prepregs über lange Zeit erhalten bleibt. Aus den erfindungsgemässen Gemischen können ferner gute Filme von geringer Dicke ($\leqq$ 0,1 mm) hergestellt werden.

Gegenstand vorliegender Erfindung ist somit ein härtbares Epoxidharzgemisch enthaltend

(a) als Epoxidharzkomponente 50 bis 100 Gew.-% einer Tetraglycidylverbindung der Formel I

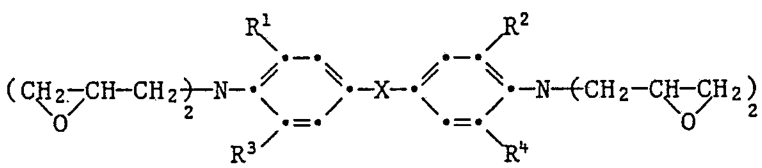

(I),

worin $R^1$, $R^2$, $R^3$ und $R^4$ unabhängig voneinander je ein Wasserstoffatom, ein Halogenatom oder ein $C_1$-$C_4$-Alkyl bedeuten und X für eine direkte Bindung, ein Methylen, Isopropyliden, O, CO, S oder $SO_2$ steht, und 0 bis 50 Gew.-%, bezogen auf die Tetraglycidylverbindung der Formel I, einer Diepoxidverbindung oder einer von der Verbindung der Formel I verschiedenen Polyepoxidverbindung,

(b) als Härtungsmittel für die Epoxidharzkomponente das Diamin der Formel II

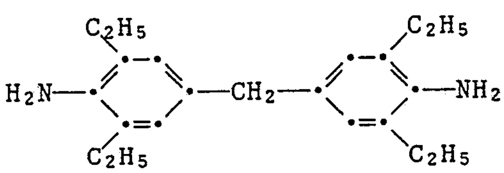

(II)

in einer Menge, dass pro Epoxidäquivalent der Epoxidharzkomponente (a) 0,2 bis 1,1 Aminwasserstoffäquivalente vorliegen,

ein Diamin der Formel III

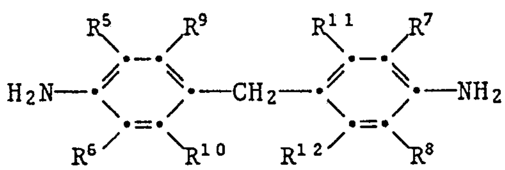

(III),

worin $R^5$, $R^6$, $R^7$ und $R^8$ unabhängig voneinander je ein $C_1$-$C_4$-Alkyl bedeuten, wobei nicht mehr als zwei der $R^5$ bis $R^8$-Substituenten für ein Ethyl stehen, und $R^9$, $R^{10}$, $R^{11}$ und $R^{12}$ unabhängig voneinander je ein Wasserstoff- oder Halogenatom bedeuten, in einer Menge, dass pro Epoxidäquivalent 0,0 bis 0,8 Aminwasserstoffäquivalente vorliegen, ein disekundäres Diamin der Formel IV

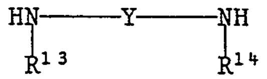 (IV),

worin Y einen unsubstituierten oder durch $C_1$-$C_4$-Alkyle substituierten Polymethylenrest mit mindestens 4 C-Atomen in der linearen Polymethylenkette und $R^{13}$ und $R^{14}$ je einen unsubstituierten oder durch $C_1$-$C_4$-Alkyle substituierten gesättigten carbocyclischen Ring oder ein Ringsystem mit mindestens 5 Ringkohlenstoffatomen bedeuten, in einer Menge, dass pro Epoxidäquivalent 0,0 bis 0,2 Aminwasserstoffäquivalente vorliegen, wobei die Summe der Aminwasserstoffäquivalente der Diamine der Formeln II, III und 1V nicht grösser als 1,2 ist,

(c) 10 bis 60 Gew.-%, bezogen auf die Epoxidharzkomponente (a) eines Thermoplasten mit einer Glasumwandlungstemperatur von mindestens 150° C und

(d) 0 bis 20 Gew.-%, bezogen auf die Epoxidharzkomponente (a) eines aminoder carboxylterminierten Kautschuks auf Basis von Butadien oder Butadien-Acrylnitril.

In den erfindungsgemässen Gemischen besteht die Epoxidharzkomponente (a) vorzugsweise bis zu 100 Gew.-% aus einer Verbindung der Formel I. Von den Verbindungen der Formel I stellt die Tetraglycidylverbindung des 4,4′-Diaminodiphenylmethans eine bevorzugte Verbindung dar.

Die Verbindungen der Formel I sind bekannt und zum Teil im Handel erhältlich.

Als Di- oder Polyepoxidverbindungen, welche bis zu 50 Gew.-% in den erfindungsgemässen härtbaren Epoxidharzgemischen vorhanden sein können, kommen beispielsweise folgende Epoxidverbindungen in Frage:

Polyglycidyl- und Poly(β-methylglycidyl)ester, erhältlich durch Umsetzung von Verbindungen mit zwei oder mehr Carbonsäuregruppen pro Molekül mit Epichlorhydrin, Glycerindichlorhydrin oder β-Methylepichlorhydrin in Gegenwart von Alkali. Solche Polyglycidylester können von aliphatischen Polycarbonsäuren, z.B. Oxalsäure, Bernsteinsäure, Glutarsäure, Adipinsäure, Pimelinsäure, Suberinsäure, Azelainsäure, Sebacinsäure, dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, oder von aromatischen Polycarbonsäuren, wie Phthalsäure, Isophthalsäure und Terephthalsäure, abgeleitet sein.

Weitere Beispiele sind Polyglycidyl- und Poly(β-methylglycidyl)-ether, erhältlich durch Umsetzung von Verbindungen mit mindestens zwei freien alkoholischen Hydroxylgruppen und/oder phenolischen Hydroxylgruppen pro Molekül mit geeigneten Epichlorhydrinen unter alkalischen Bedingungen oder aber in Gegenwart von sauren Katalysatoren, gefolgt von einer Behandlung mit Alkali. Solche Ether können aus acyclischen Alkoholen, wie Ethylenglykol, Diethylenglykol und höheren Poly(oxyethylen)glykolen, Propan-1,2-diol und Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylplpropan, Pentaerythrit, Sorbit und Polyepichlorhydrinen, von cycloaliphatischen Alkoholen, wie 1,3- und 1,4-Cyclohexandiol, Bis-(4-hydroxycyclohexyl)methan, 2,2-Bis-(4-hydroxycyclohexyl)propan und 1,1-Bis-(hydroxymethyl)-cyclohex-3-en, sowie von Alkoholen mit aromatischen Kernen, wie N,N-Bis-(2-hydroxyethyl)anilin und p,p′-Bis-(-2-hydroxyethylamino)diphenylmethan, abgeleitet sein. Sie können sich auch von einkernigen Phenolen, wie Resorcin und Hydrochinon, und von mehrkernigen Phenolen, wie Bis-(4-hydroxyphenyl)methan, 4,4′-Dihydroxydiphenyl, Bis-(4-hydroxyphenyl)sulfon, 1,1,2,2-Tetrakis-(4-hydroxyphenyl)ethan, 2,2-Bis-(4-hydroxyphenyl)propan, 2,2-Bis-(3,5-dibrom-4-hydroxyphenyl)propan und Novolaken aus Aldehyden, wie Formaldehyd, Acetaldehyd, Chloral und Furfurylaldehyd, und Phenolen, wie dem unsubstituierten Phenol und Phenolen, die im Ring durch Chloratome oder Alkylgruppen mit bis zu 9 C-Atomen substituiert sind, wie 4-Chlorphenol, 2-Methylphenol und 4-tert.-Butylphenol, ableiten.

Beispiele von Poly(N-glycidyl)verbindungen sind Verbindungen, die durch Dehydrochlorierung von Umsetzungsprodukten aus Epichlorhydrin und Aminen mit mindestens zwei Aminwasserstoffatomen erhalten werden, wie Anilin, n-Butylamin und m-Xylylendiamin; Triglycidylisocyanurat und N,N′-Diglycidylderivate von cyclischen Alkylenharnstoffen, wie Ethylenharnstoff und 1,3-Propylenharnstoff, oder Hydantoine, wie 5,5-Dimethylhydantoin.

Beispiele von Poly(S-glycidyl)verbindungen sind die S-Glycidylderivate von Dithiolen, wie Ethan-1,2-dithiol und Bis-(4-mercaptomethylphenyl)ether.

Es können auch Epoxidharze verwendet werden, bei denen die 1,2-Epoxidgruppen an verschiedene Heteroatome gebunden sind, z.B. das N,N,O-Triglycidylderivat von 4-Aminophenol, der Glycidylether-glycidylester von Salicylsäure, N-Glycidyl-N′-(2-glycidyloxypropyl)-5,5-dimethylhydantoin und 2-Glycidyloxy-1,3-bis-(5,5-dimethyl-1-glycidylhydantoin-3-yl)propan.

Die genannten Epoxidverbindungen sind bekannt und zum Teil im Handel erhältlich.

Die erfindungsgemässen härtbaren Gemische enthalten als Härtungsmittel (b) vorzugsweise ein Gemisch aus dem Diamin der Formel II und einem Diamin der Formel III oder IV. Das Härtungsmittel (b) kann auch aus einem Gemisch aus dem Diamin der Formel II, einem Diamin der Formel III und einem Diamin der Formel IV bestehen, wobei die Summe der Aminwasserstoffäquivalente der Diamine der Formeln II, III und IV nicht grösser als 1,2 sein darf.

Insbesondere besteht das Härtungsmittel (b) aus einem Gemisch aus dem Diamin der Formel II und einem Diamin der Formel III, wobei vorzugsweise ein Mischungsverhältnis von 1:1 bis 3:1 eingesetzt wird.

Wie eingangs erwähnt, sind die Diamine der Formeln II und III bekannt. In der Formel III stehen $R^5$, $R^6$, $R^7$ und $R^8$ vorzugsweise unabhängig voneinander je für Methyl, Ethyl, Propyl oder Isopropyl, insbesondere unabhängig voneinander je für Methyl oder Isopropyl, und bedeuten $R^9$, $R^{10}$, $R^{11}$ und $R^{12}$ je ein Wasserstoffatom.

Geeignete Verbindungen der Formel III sind beispielsweise Bis-(3-methyl-4-amino-5-ethylphenyl)-methan, Bis-(3-methyl-4-amino-5-isopropylphenyl)-methan, Bis-(3,5-diisopropyl-4-aminophenyl)-methan, Bis-(2-chlor-3,5-diethyl-4-aminophenyl)-methan, Bis-(3-ethyl-4-amino-5-sek.-butylphenyl)-methan und Bis-(2,6-dichlor-3,5-diethyl-4-aminophenyl)-methan.

Ein besonders bevorzugtes Härtungsmittel (b) ist ein Gemisch aus dem Diamin der Formel II und einem Diamin der Formel IV. Die Diamine der Formel IV sowie deren Herstellungsverfahren sind aus der DE-Patentschrift 17 70 539 bekannt. Bevorzugt verwendet man als Diamine der Formel IV solche, worin Y in der angegebenen Formel einen unsubstituierten Polymethylenrest mit 4 bis 8 C-Atomen darstellt und $R^{13}$ und $R^{14}$ je für ein Cyclopentyl oder Cyclohexyl stehen.

Geeignete Verbindungen der Formel IV sind beispielsweise N,N′-Di-(cyclopentyl)-hexamethylendiamin, N,N′-Di-(cyclohexyl)-2,2,4-trimethylhexamethylendiamin, N,N′-Di-(cyclohexyl)-2,4,4-trimethylhexamethylendiamin und insbesondere das N,N′-Di-(cyclohexyl)-hexamethylendiamin.

Als Thermoplaste (c) können in den erfindungsgemässen härtbaren Stoffgemischen all jene bekannten Polymere eingesetzt werden, die eine genügend hohe Glasumwandlungstemperatur (Tg), d.h. Tg $\geqq$ 150°C aufweisen und mit dem betreffenden Epoxidharz-Härter System mischbar sind. Anhand ihrer Eigenschaften sind als Thermoplaste besonders Polysulfone, Polyethersulfone, Polyimide oder Polyetherimide und insbesondere Polysulfone und Polyetherimide geeignet. Dabei werden besonders Thermoplaste mit einer Glasumwandlungstemperatur von 180 bis 350°C, insbesondere von 190 bis 250°C, bevorzugt. Bei der Verwendung von Polyetherimiden werden insbesondere Polymere mit einer Tg von 220 bis 250°C, und bei der Verwendung von Polyimiden solche mit einer Tg von 280 bis 340°C bevorzugt.

Falls ein Polysulfon als Thermoplast (c) eingesetzt wird, eignen sich z.B. Verbindungen mit der wiederkehrenden Einheit der Formel

$-A-SO_2-$ ,

worin A eine zweiwertige, gegebenenfalls durch Ethersauerstoffatome und/oder zweiwertige aliphatische Gruppen unterbrochene aromatische Gruppe bedeutet.

Die einzusetzenden Polysulfone können in bekannter Weise z.B. dadurch erhalten werden, dass man entweder (1) ein Sulfonylhalogenid der Formel $HA_1SO_2X$ oder (2) ein Gemisch eines Disulfonylhalogenids der Formel $XSO_2A_1SO_2X$ mit einer sulfonylhalogenidfreien Verbindung der Formel $HA_2H$, worin $A_1$ und $A_2$ gleich oder verschieden sind und jeweils eine zweiwertige gegebenenfalls durch Ethersauerstoffatome und/oder zweiwertige aliphatische Gruppen unterbrochene aromatische Gruppe bedeuten und X ein Chlor- oder Bromatom darstellt, in einem inerten Lösungsmittel in Anwesenheit eines Lewis-Säure-Katalysators erhitzt. Die nach Verfahren (1) hergestellten Polysulfone enthalten die wiederkehrende Einheit

$-A_1-SO_2-$,

wohingegen die nach Verfahren (2) hergestellten Polysulfone die wiederkehrende Einheit

$-A_1-SO_2-A_2-SO_2-$

aufweisen.

In den erfindungsgemässen Gemischen bevorzugt verwendete Polysulfonharze sind solche, welche Ethergruppen in der wiederkehrenden Einheit aufweisen, jedoch von seitenständigen Hydroxylgruppen frei sind. Es handelt sich dabei besonders um Polysulfone mit einer wiederkehrenden Einheit der Formel

$-OA_3OA_4SO_2A_4-$,

worin $A_3$ und $A_4$ zweiwertige Arylen-, insbesondere Phenylengruppen, die durch Chlor oder $C_1$-$C_4$-Alkyl, beispielsweise Methylgruppen substituiert sein können, darstellen. Man erhält derartige Polysulfone in an sich bekannter Weise durch Reaktion eines Dialkalimetallsalzes eines zweiwertigen Phenols der Formel $HOA_3OH$ mit einem Bis-(monochloraryl)-sulfon der Formel $ClA_4SO_2A_4Cl$ in Dimethylsulfoxid. Bevorzugtere Polysulfonharze sind solche mit einer wiederkehrenden Einheit der Formel

$-OA_5-Y_1-A_5OA_6SO_2-A_6-$

worin $A_5$ und $A_6$ jeweils eine gegebenenfalls durch Chlor oder $C_1$-$C_4$-Alkylgruppen, wie z.B. Methylgruppen, substituierte Phenylengruppe und $Y_1$ eine Kohlenstoff-Kohlenstoffbindung, die $-SO_2-$ oder eine aliphatische Kohlenwasserstoffgruppe, insbesondere eine solche mit nicht mehr als vier Kohlenstoffatomen wie z.B. solche der Formel

$—CH_2—$ oder 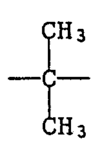

bedeuten.

Besonders bevorzugt sind thermoplastische Polysulfonharze mit wiederkehrenden Einheiten der Formel V

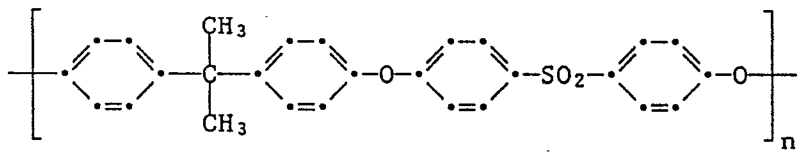 (V),

wobei n im Durchschnitt vorzugsweise einen Wert von 50-120 hat.

Besonders vorteilhafte Polysulfone sind z.B. die bei der Union Carbide Corporation erhältlichen Verbindungen, wie z B. "Polysulfone Udel P1800", das nach Angabe des Herstellers einen Schmelzpunkt im Bereich von 350-370°C, eine Wärmeformbeständigkeit (ASTM-Spezifikation D648) von 175°C hat und im Durchschnitt pro Molekül 50-80 wiederkehrende Einheiten der Formel V enthält, wobei man von einem Molekulargewichtsbereich von ungefähr 22 000-35 000 ausgehen kann.

Weiterhin geeignet ist eine bei Union Carbide Corporation unter dem Namen "Polysulfone P2300" erhältliche ähnliche Substanz; nach Angaben des Herstellers hat diese einen Molekulargewichtsbereich von 30 000-50 000, wobei man davon ausgehen kann, dass die Substanz im Durchschnitt pro Molekül ungefähr 68-113 wiederkehrende Einheiten der Formel V enthält, sowie eine bei Union Carbide Corporation unter dem Namen "Polysulfone P3500" erhältliche ähnliche Substanz; nach Angaben des Herstellers hat diese einen Molekulargewichtsbereich, der zwischen dem von "Polysulfone Udel P1800" und jenem von "Polysulfone P2300" liegt; das Molekulargewicht beträgt ca. 35 000.

Erfindungsgemäss können als Komponente (c) auch Gemische von zwei oder mehreren Thermoplasten verwendet werden.

Besonders geeignet als Thermoplaste (c) sind Polyimide, wie

- Polyimide mit Phenylindaneinheiten, wie sie z.B. im US-Patent 3,856,752 und in der EP-A 92 524 beschrieben sind, insbesondere solche mit einer Glasumwandlungstemperatur von etwa 305°C und einem durchschnittlichen Molekulargewicht von ca. 65000, wie z.B. das Matrimid® 5218 der Ciba-Geigy,
- Homo- und Copolyimide aus mindestens einer aromatischen Tetracarbonsäure und mindestens einem aromatischen Diamin, wie z.B. im US-Patent 4,629,777 offenbart und
- Homo- und Copolyimide, wie sie z.B. in den EP-A 162 017, EP-A 181 837 und im US-Patent 4,629,685 beschrieben sind.

Bevorzugte Thermoplaste (c) sind auch Polyetherimide, wie z.B. die unter der Bezeichnung Ultem® (z.B. als Ultem® 1000) im Handel erhältlichen Produkte der Fa. General Electric. Weitere bevorzugte Thermoplaste sind Polyethersulfone, wie z.B. Victrex PES 100 P der ICI oder Udel P 1800 der Union Carbide.

Geeignete Polyamidimide sind beispielsweise die in den US-Patenten 3,894,114, 3,948,835, 3,926,911 und 3,950,408 beschriebenen Verbindungen.

Die in den erfindungsgemässen härtbaren Gemischen als Komponente (d) gegebenenfalls enthaltenen amin- oder carboxylterminierten Kautschuke auf Basis von Butadien oder Butadien-Acrylnitril sind bekannt und im Handel unter der Bezeichnung Hycar®, reaktive Flüssigpolymere von der Firma B.F. Goodrich erhältlich. Die amin- (AT) bzw. carboxylterminierten (CT) reaktiven Flüssigpolymere sind Homopolymere des Butadiens (B) oder Copolymere aus Butadien und Acrylnitril (BN). In einigen erhältlichen Produkten sind zusätzliche reaktive Gruppen, wie beispielsweise Vinyl-oder Carboxylgruppen, über die Polymerkette verteilt.

In vereinfachter Form kann beispielsweise für den carboxylterminierten Butadien-Acrylnitril-Kautschuk (CTBN) die Struktur wie folgt dargestellt werden,

$$HOOC-\left[(CH_2-CH{=}CH-CH_2)_x-(CH_2-\underset{CN}{CH})_y\right]_z-COOH ,$$

worin x eine Zahl von 1-10, vorzugsweise 2-7, y eine Zahl von 1-5, vorzugsweise 1-3, und z eine Zahl von 1-30, vorzugsweise 5-15, bedeuten.

Vorzugsweise enthalten die erfindungsgemässen Gemische als Komponente (d) einen aminterminierten Kautschuk auf Basis von Butadien oder Butadien-Acrylnitril, insbesondere einen aminterminierten Kautschuk auf Basis von Butadien.

Die erfindungsgemässen Gemische können durch gutes Durchmischen bzw. Ineinanderlösen aller Komponenten bereitgestellt werden, wobei die einzelnen Komponenten in verschiedener Reihenfolge beigegeben werden können. Der Thermoplast kann z.B. unter Erhitzen im Epoxidharz gelöst werden, und nach Abkühlen können die weiteren Zusätze zugegeben werden. Man kann aber auch eine Lösung des Thermoplasten in einem inerten Lösungsmittel, wie z.B. in Methylenchlorid, herstellen und diese mit dem Epoxidharz-Härter Gemisch vermischen.

Die erfindungsgemässen Gemische können vielseitig angewendet werden und eignen sich beispielsweise als Giessharze, Laminier- oder Tränkharze, Formmassen, Dichtungsmassen, Einbettungs- und Isoliermassen für die Elektrotechnik und vorzugsweise als Klebstoffe und als Matrixharze für Verbundwerkstoffe, insbesondere zur Herstellung von Prepregs für faserverstärkte Kunststoffe.

Gewünschtenfalls, insbesondere bei der Mitverwendung von Modifizierungsmitteln, können die erfindungsgemässen Gemische in einem organischen Lösungsmittel, wie Toluol, Xylol, Methylethylketon, Methylenchlorid oder einem ähnlichen, in der Lackindustrie üblichen Lösungsmittel oder Lösungsmittelgemisch gelöst

werden. Solche Lösungen eignen sich vor allem als Imprägniermittel oder Beschichtungsmittel.

Die erfindungsgemässen härtbaren Gemische können ferner vor der Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen oder Formtrennmitteln, versetzt werden. Als Streckmittel, Verstärkungsmittel, Füllmittel und Pigmente, die in den erfindungsgemässen härtbaren Mischungen eingesetzt werden können, seien z.B. genannt: flüssige Cumaron-Inden-Harze, Textilfasern, Glasfasern, Asbestfasern, Borfasern, Kohlenstoffasern, Polyethylenpulver, Polypropylenpulver, Quarzmehl, mineralische Silikate, wie Glimmer, Asbestmehl, Schiefermehl, Kaolin, Kreidemehl, Antimontrioxid, Bentone, Lithopone, Schwerspat, Titandioxid, Russ, Graphit, Oxidfarben, wie Eisenoxid, oder Metallpulver, wie Aluminiumpulver oder Eisenpulver. Falls die erfindungsgemässen Mischungen für die Herstellung von Prepregs eingesetzt werden, ist eine Zugabe von Kurzfasern besonders erwünscht.

Als Verlaufmittel beim Einsatz der härtbaren Mischungen speziell im Oberflächenschutz, kann man z.B. Silikone, flüssige Acrylharze, Celluloseacetobutyrat, Polyvinylbutyral, Wachse, Stearate etc. (welche z.T. auch als Formtrennmittel Anwendung finden) zusetzen.

Als Weichmacher können für die Modifizierung der härtbaren Mischungen z.B. Dibutyl-, Dioctyl- und Dinonylphthalat, Trikresylphosphat, Trixylenylphosphat und Diphenoxyethylformal eingesetzt werden.

Die erfindungsgemässen Gemische werden vorzugsweise gehärtet, indem man sie auf eine Temperatur im Bereich von 120 bis 250°C, insbesondere 160° bis 220°C erhitzt. Man kann die Härtung in bekannter Weise auch zwei- oder mehrstufig durchführen, wobei man die erste Härtungsstufe bei niedriger Temperatur und die Nachhärtung bei höherer Temperatur durchführt.

Gewünschtenfalls kann man den härtbaren Gemischen zur Herabsetzung der Viskosität aktive Verdünner, wie z.B. Neopentylglykol-, Butandiol- oder Hexandiol-Diglycidylether, zusetzen.

Gegenstand der vorliegenden Erfindung ist auch die Verwendung der erfindungsgemässen Gemische zur Herstellung von gehärteten Formstoffen, sowie die Verwendung zur Herstellung von Prepregs für faserverstärkte Verbundstoffe. Die Prepregs können in an sich bekannter Weise hergestellt werden, z.B. im Imprägnierverfahren in Anwesenheit eines der oben erwähnten Lösungsmittel, eines halogenierten Lösungsmittels, wie z B. Methylenchlorid, oder im sogenannten "hot melt"-Verfahren.

Die erfindungsgemässen Formstoffe zeichnen sich im allgemeinen durch hohe Glasumwandlungstemperaturen bei gleichzeitig hohen mechanischen Festigkeiten, und insbesondere durch eine ausgezeichnete Bruchzähigkeit sowie eine sehr hohe Dehnbarkeit aus.

In den Beispielen werden folgende Verbindungen als Epoxidharz, Thermoplast oder Kautschuk eingesetzt.

Epoxidharz A:

N,N,N',N'-Tetraglycidylderivat von 4,4'-Diaminodiphenylmethan mit einem Epoxidgehalt von 7.8 Aequivalenten/kg und einer Viskosität von 13500 mPa·s bei 50°C.

Epoxidharz B:

N,N,N',N'-Tetraglycidylderivat von 4,4'-Diaminodiphenylmethan mit einem Epoxidgehalt von 9,1 Aequivalenten/kg und einer Viskosität von 5000 mPa·s bei 50°C.

Epoxidharz C:

Bisphenol A-diglycidylether mit einem Epoxidgehalt von 5,2 bis 5,4 Aequivalenten/kg und einer Viskosität bei 25°C von $10^3$-$12^3$ MPa·s.

Epoxidharz D:

Bisphenol F-diglycidylether mit einem Epoxidgehalt von 5,5 bis 5,9 Aequivalenten/kg und einer Viskosität bei 25°C von 3000-10000 MPa·s.

Epoxidharz E:

Phenolnovolakepoxidharz mit einem Epoxidgehalt von 5,6 bis 5,8 Aequivalenten/kg und einer Schmelzviskosität bei 50°C von 1100-1700 MPa·s.

Epoxidharz F:

N,N-Diglycidyl-p-aminophenolglycidylether (ERLA® 0510).

Polysulfon I:

Polysulfon Udel P1800® (Union Carbide Corporation) mit einem Schmelzpunkt im Bereich von 350-370°C, einer Wärmeformbeständigkeit (nach ASTM D 648) von 175°C, einer Glasumwandlungstemperatur von 200°C und einem Molekulargewichtsbereich von ca. 22 000-23 000.

Polyetherimid I:

Polyetherimid Ultem® 1000 (General Electric) mit einer Glasumwandlungstemperatur von 219°C und der wiederkehrenden Struktureinheit der Formel

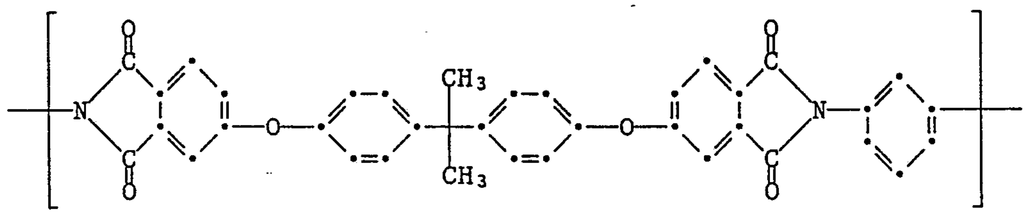

Polyethersulfon I:
Polyethersulfon Victrex P 5003 (ICI) mit einer Wärmeformbeständigkeit (nach ISO 75) von 215°C und der wiederkehrenden Struktureinheit der Formel

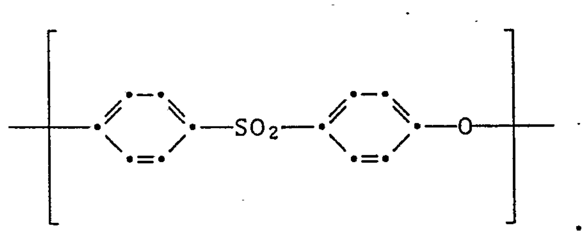

Beispiel 1:
15 g Polysulfon I werden bei 150°C in 128 g (1 Epoxidäquivalent) Epoxidharz A gelöst. Anschliessend werden 71 g (0,9 Aminwasserstoffäquivalente) Bis-(3,5-diethyl-4-aminophenyl)-methan zugemischt und das Gemisch auf etwa 130°C abgekühlt. Zu dieser Mischung werden 10 g (0,07 Aminwasserstoffäquivalente) N,N′-Dicyclohexyl-1,6-diaminohexan zugemischt. Die Harzmischung ist bei Raumtemperatur zäh-viskos und nach 5 Wochen Lagerung bei Raumtemperatur noch klebrig. Die Mischung wird von eingeschlossenen Luftblasen befreit und in eine 4 mm dicke Form aus Aluminium (Anticorodal) gegossen. Nach einer Härtungsdauer von 2 Stunden bei 160°C und 2 Stunden bei 180°C werden Formkörper mit folgenden Eigenschaften erhalten:
Glasübergangstemperatur (Tg, gemessen mit dem Gerät "TMA 3000" von Mettler als Peak-Maximum der Eindringgeschwindigkeit) = 198°C
Biegefestigkeit (BF) nach ISO 178 bei 23°C = 131 MPa
Randdehnung (RD) nach ISO 178 = 11 %.

Beispiel 2:
Es wird wie in Beispiel 1 ein Harzgemisch hergestellt, wobei jetzt 77 g (1,0 Aequivalent) Bis-(3,5-diethyl-4-aminophenyl)-methan und kein weiteres Diamin zugesetzt werden. Nach 6 Tagen Lagerung bei Raumtemperatur verliert die Mischung ihre Klebrigkeit. Die unter gleichen Bedingungen gehärteten Formkörper weisen folgende Eigenschaften auf:
Tg = 203°C
BF = 133 MPa
RD = 13,2 %.

Beispiel 3:
40 g Polyetherimid I werden in 200 g Dichlormethan bei Raumtemperatur gelöst und mit 128 g (1 Aequivalent) Epoxidharz A gut gemischt. Unter Rühren und Erwärmen bis auf 150°C wird das Lösungsmittel abgedampft. Entsprechend Beispiel 1 werden 71 g (0,9 Aequivalente) Bis-(3,5-diethyl-4-aminophenyl)-methan und 10 g (0,07 Aequivalente) N,N′-Dicyclohexyl-1,6-diaminohexan zugegeben. Das härtbare Gemisch ist bei Raumtemperatur sehr hochviskos-zäh und weist auch nach 20 Tagen Lagerung noch eine gute Klebrigkeit auf. Im DSC-Diagramm mit einer Aufheizgeschwindigkeit von 10°/min erreicht die Härtungsreaktion bei 235°C die maximale Exothermie (T max). Die Viskosität ($\eta$) beträgt 7600 mPa·s bei 120°C. Nach einer Härtungsdauer von 2 Stunden bei 160°C und 2 Stunden bei 200°C werden Formkörper mit folgenden Eigenschaften erhalten:
Tg = 208°C
BF = 142 MPa
RD = 10,1 %.

Beispiel 4:
Beispiel 3 wird wiederholt, wobei anstelle von 40 g Polyetherimid I nun ein Gemisch aus 20 g Polysulfon I und 20 g Polyetherimid I eingesetzt wird. Die unter gleichen Härtungsbedingungen hergestellten Formkörper weisen folgende Eigenschaften auf:

T max (DSC) = 237°C
η = 4800 mPa·s
Tg = 139 MPa
RD = 9,0 %.

Beispiel 5:

Beispiel 3 wird wiederholt und es werden zum härtbaren Gemisch zusätzlich 3 g eines aminterminierten Butylnitril-Kautschuks Hycar® ATBN 1300 x 16 (Goodrich) zugegeben. Die unter gleichen Härtungsbedingungen hergestellten Formkörper weisen folgende Eigenschaften auf:
T max (DSC) = 234 °C
η (120°C) = 7000 mPa·s
BF = 141 MPa
RD = 12,9 %.

Beispiel 6:

35 g Polyetherimid I werden in 200 ml Methylenchlorid gelöst. Anschliessend werden 110 g (1 Aequivalent) Epoxidharz B zugegeben und das Methylenchlorid wird durch Erwärmen unter Rühren abdestilliert. Dann wird die Mischung auf etwa 150°C erwärmt und darin werden 55 g (0,7 Aequivalente) Bis-(3,5-diethyl-4-aminophenyl)-methan, 24 g (0,3 Aequi valente) Bis-(3-methyl-4-amino-5-isopropylphenyl)-methan und 3 g Hycar® ATBN 1300 x 16 gelöst. Aus dieser Mischung werden entsprechend Beispiel 1 Formkörper hergestellt, die folgende Eigenschaften aufweisen:
Tg = 197°C
BF = 148 MPa
RD = 11,6 %.

Die ungehärtete Harzmischung weist bei 120°C eine Viskosität von 2550 mPa·s und bei 70°C eine Viskosität von 52000 mPa·s auf und lässt sich zum Beispiel aus einer Lösung in Methylenchlorid gut zu dünnen Filmen (0,1 mm) verarbeiten, wie sie für die Prepregherstellung benutzt werden. Die Filme weisen eine gute Klebrigkeit auf und sind auch nach mehrtägiger Lagerung bei Raumtemperatur noch klebrig und transparent, d.h. der Härter ist im Harz nicht auskristallisiert.

Beispiel 7:

Entsprechend Beispiel 1 wird eine härtbare Mischung bestehend aus 60 g (0,47 Aequivalente) Epoxidharz A, 40 g (0,21 Aequivalente) Epoxidharz C, 31,8 g (0,41 Aequivalente) Bis-(3,5-diethyl-4-aminophenyl)-methan sowie 15,2 g (0,24 Aequivalente) Bis-(3-methyl-4-amino-5-ethylphenyl)-methan, 20 g Polysulfon I hergestellt. Die Mischung kann im Schmelzverfahren zu einem Film mit guter Klebrigkeit verarbeitet werden. Nach mehrtägiger Lagerung zeigt der Film keine Anzeichen einer Rekristallisierung. Die unter solchen Bedingungen gehärteten Formkörper weisen folgende Eigenschaften auf:
Tg 206°C
BF 130 MPa
RD 11,3 %.

Beispiel 8:

Eine weitere Mischung wird hergestellt aus 80 g Epoxidharz A, 20 g Epoxidharz D, 5 g eines carboxylterminierten Kautschuks auf Basis von Butadien und Acrylnitril (= Hycar® CTBN 1300 x 13), 43 g Bis-(3,5-diethyl-4-aminophenyl)-methan (Härter II) und 11,5 g Bis-(3-methyl-4-amino-5-isopropylphenyl)-methan (Härter I), 10 g Polysulfon I und 15 g Polyetherimid I. Vor Zugabe von Thermoplast und Amin wird der Carboxyl terminierte Kautschuk während 1 Stunde bei 150°C vorreagiert. Der erhaltene Film zeigt keine Anzeichen einer Rekristallisation. Der ausgehärtete Formkörper hat folgende Eigenschaften:
Tg 205°C
BF 117 MPa
RD 5,1 %.

Beispiel 9: Mit folgenden Mischungen werden ebenfalls nicht auskristallisierende, klebrige Filme erhalten:

| | A | B |
|---|---|---|
| Epoxidharz A | 80 g (0,63 Aequiv.) | 80 g (0,63 Aequiv.) |
| Epoxidharz E | 20 g (0,11 Aequiv.) | 0 |
| Epoxidharz F | 0 | 20 g (0,21 Aequiv.) |
| Härter II | 43 g (0,56 Aequiv.) | 43 g (0,56 Aequiv.) |
| Härter I | 11,5 g (0,15 Aequiv.) | 0 |
| Härter III*) | 0 | 14 g (0,15 Aequiv.) |
| Polyethersulfon I | 20 g | 20 g |

*) Härter III = Bis-(3,5-diethyl-4-amino-6-chlorphenyl)-methan

Die gemäss Beispiel 1 gehärteten Formkörper haben folgende Eigenschaften:

| | A | B |
|---|---|---|
| Tg [°C] | 208 | 213 |
| BF [MPa] | 138 | 145 |
| RD [%] | 8,4 | 10,2. |

Beispiel 10: Herstellung von Kohlenstoffaserlaminaten:

a) Mit der Mischung entsprechend Beispiel 3 wird nach dem Schmelzverfahren ein unidirektionales Prepreg hergestellt (Kohlenstoffaser "T-300 6K" der Firma TORAY). Nach dem Vakuumsackverfahren wird im Autoklaven ein unidirektionales Laminat hergestellt (Erhitzen von 3°C/min bis 180°C, dann 3 Stunden bei 180°C und 7 bar Druck). Die Laminate weisen eine interlaminare Scherfestigkeit (ILSS gemäss DIN 29 971) von 94 MPa bei 23°C und von 56 MPa bei 120°C auf. Nach Wasserlagerung während 14 Tagen bei 70°C beträgt die ILSS bei 23°C = 83 MPa und bei 120°C = 44 MPa.

b) Ein Laminat, hergestellt aus einer Mischung entsprechend Beispiel 6, ergibt folgende Eigenschaften:
Tg = 219°C
ILSS bei 23 °C = 81 MPa
ILSS bei 120°C = 60 MPa

ILSS bei 23 °C = 88 MPa } nach Wasserlagerung
ILSS bei 120°C = 51 MPa } 14 Tage bei 70°C

BF bei 0°C = 1870 MPa
BF bei 90°C = 91 MPa
Wasseraufnahme = 0,5 %.

**Patentansprüche**

1. Härtbares Gemisch enthaltend

(a) als Epoxidharzkomponente 50 bis 100 Gew.-% einer Tetraglycidylverbindung der Formel I

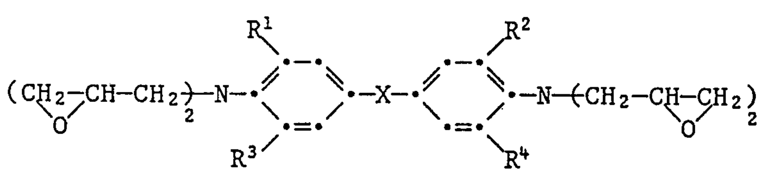 (I),

worin $R^1$, $R^2$, $R^3$ und $R^4$ unabhängig voneinander je ein Wasserstoffatom, ein Halogenatom oder ein $C_1$-$C_4$-Alkyl bedeuten und X für eine direkte Bindung, ein Methylen, Isopropyliden, O, CO, S oder $SO_2$ steht, und 0 bis 50 Gew.-%, bezogen auf die Tetraglycidylverbindung der Formel I, einer Diepoxidverbindung oder einer von der Verbindung der Formel I verschiedenen Polyepoxidverbindung,

(b) als Härtungsmittel für die Epoxidharzkomponente das Diamin der Formel II

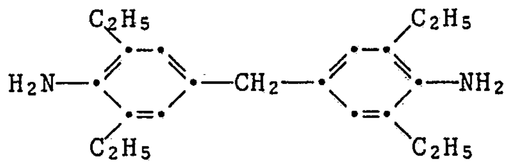

(II)

in einer Menge, dass pro Epoxidäquivalent der Epoxidharzkomponente (a) 0,2 bis 1,1 Aminwasserstoffäquivalente vorliegen, ein Diamin der Formel III

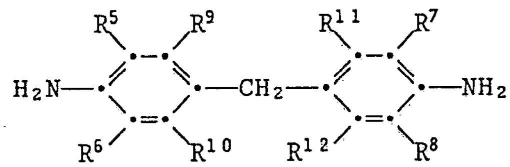

(III),

worin $R^5$, $R^6$, $R^7$ und $R^8$ unabhängig voneinander je ein $C_1$-$C_4$-Alkyl bedeuten, wobei nicht mehr als zwei der $R^5$ bis $R^8$-Substituenten für ein Ethyl stehen, und $R^9$, $R^{10}$, $R^{11}$ und $R^{12}$ unabhängig voneinander je ein Wasserstoff- oder Halogenatom bedeuten, in einer Menge, dass pro Epoxidäquivalent 0,0 bis 0,8 Aminwasserstoffäquivalente vorliegen, ein disekundäres Diamin der Formel IV

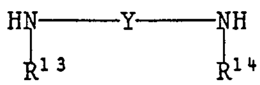

(IV),

worin Y einen unsubstituierten oder durch $C_1$-$C_4$-Alkyle substituierten Polymethylenrest mit mindestens 4 C-Atomen in der linearen Polymethylenkette und $R^{13}$ und $R^{14}$ je einen unsubstituierten oder durch $C_1$-$C_4$-Alkyle substituierten gesättigten carbocyclischen Ring oder ein Ringsystem mit mindestens 5 Ringkohlenstoffatomen bedeuten, in einer Menge, dass pro Epoxidäquivalent 0,0 bis 0,2 Aminwasserstoffäquivalente vorliegen, wobei die Summe der Aminwasserstoffäquivalente der Diamine der Formeln II, III und IV nicht grösser als 1,2 ist,

(c) 10 bis 60 Gew.-%, bezogen auf die Epoxidharzkomponente (a) eines Thermoplasten mit einer Glasumwandlungstemperatur von mindestens 150° C und

(d) 0 bis 20 Gew.-%, bezogen auf die Epoxidharzkomponente (a) eines aminoder carboxylterminierten Kautschuks auf Basis von Butadien oder Butadien-Acrylnitril.

2. Gemisch gemäss Anspruch 1, dadurch gekennzeichnet, dass die Epoxidharzkomponente (a) zu 100 Gew.-% aus einer Verbindung der Formel I besteht.

3. Gemisch gemäss Anspruch 1, dadurch gekennzeichnet, dass die Epoxidharzkomponente (a) aus einer Verbindung der Formel I besteht, worin X für Methylen steht und $R^1$ bis $R^4$ je ein Wasserstoffatom bedeuten.

4. Gemisch gemäss Anspruch 1, dadurch gekennzeichnet, dass das Härtungsmittel (b) ein Gemisch aus dem Diamin der Formel II und einem Diamin der Formel III oder IV darstellt.

5. Gemisch gemäss Anspruch 1, dadurch gekennzeichnet, dass das Härtungsmittel (b) ein Gemisch aus dem Diamin der Formel II und einem Diamin der Formel III darstellt.

6. Gemisch gemäss Anspruch 1 und 5, dadurch gekennzeichnet, dass im Diamin der Formel III $R^5$, $R^6$, $R^7$ und $R^8$ unabhängig voneinander je für Methyl, Ethyl, Propyl oder Isopropyl stehen und $R^9$, $R^{10}$, $R^{11}$ und $R^{12}$ je ein Wasserstoffatom bedeuten.

7. Gemisch gemäss Anspruch 6, dadurch gekennzeichnet, dass im Diamin der Formel III $R^5$, $R^6$, $R^7$ und $R^8$ unabhängig voneinander je für Methyl oder Isopropyl stehen.

8. Gemisch gemäss Anspruch 1, dadurch gekennzeichnet, dass das Härtungsmittel (b) ein Gemisch aus dem Diamin der Formel II und einem Diamin der Formel IV darstellt.

9. Gemisch gemäss Anspruch 1 und 8, dadurch gekennzeichnet, dass im Diamin der Formel IV A einen unsubstituierten Polymethylenrest mit 4 bis 8 C-Atomen darstellt und $R^{13}$ und $R^{14}$ je für einen Cyclopentyl oder Cyclohexyl stehen.

10. Gemisch gemäss Anspruch 1, dadurch gekennzeichnet, dass der Thermoplast (c) ein Polysulfon, Polyethersulfon, Polyimid oder ein Polyetherimid ist.

11. Gemisch gemäss Anspruch 10, dadurch gekennzeichnet, dass der Thermoplast (c) ein Polysulfon oder Polyetherimid ist.

12. Gemisch gemäss Anspruch 11, dadurch gekennzeichnet, dass die Komponente (d) ein aminterminierter Butadien- oder Butadien-Acrylnitril-Kautschuk ist.

13. Verwendung des Gemisches gemäss Anspruch 1 zur Herstellung von gehärteten Formstoffen.

14. Verwendung des Gemisches gemäss Anspruch 1 zur Herstellung von Prepregs für faserverstärkte Verbundstoffe.